(19) Europäisches Patentamt
European Patent Office
Office européen des brevets

(11) EP 0 769 647 B1

(12) EUROPÄISCHE PATENTSCHRIFT

(45) Veröffentlichungstag und Bekanntmachung des Hinweises auf die Patenterteilung:
27.05.1998 Patentblatt 1998/22

(51) Int Cl.⁶: **F16L 21/06**, F16L 3/133, F16L 55/033

(21) Anmeldenummer: 95116481.3

(22) Anmeldetag: 19.10.1995

(54) **Spannschelle zum Befestigen einer Fluidleitung**

Clamp for fixing a pipe

Collier de serrage pour la fixation d'un tuyau

(84) Benannte Vertragsstaaten:
DE FR GB IT

(43) Veröffentlichungstag der Anmeldung:
23.04.1997 Patentblatt 1997/17

(73) Patentinhaber: Rasmussen GmbH
D-63477 Maintal (DE)

(72) Erfinder: Sauer, Heinz
D-53549 Ronneburg (DE)

(74) Vertreter: Knoblauch, Ulrich, Dr.-Ing. et al
Patentanwälte Dr. Knoblauch,
Kühhornshofweg 10
60320 Frankfurt (DE)

(56) Entgegenhaltungen:
DE-C- 3 522 497          DE-C- 4 204 762
DE-U- 9 416 471          US-A- 2 561 635

## Beschreibung

Die Erfindung bezieht sich auf eine Spannschelle zum Befestigen einer Fluidleitung, mit wenigstens einem Schellenband aus Metall, das an jedem Ende eine radial nach außen aus dem Schellenband abgebogene Spannbacke aufweist, wobei die Spannbacken von einer Spannschraube durchsetzt sind.

Bei bekannten Spannschellen dieser Art (DT 19 23 950 A1, DE 27 49 121 B1, DE 29 26 626 C2, DE 30 38 550 C2, DE 35 22 497 C1) sind die Enden des Schellenbandes einmal oder mehrmals zurückgebogen, um die Spannbacke zu versteifen, oder die zurückgebogenen Abschnitte jeweils um einen Bolzen herumgelegt und am Schellenband angeschweißt, wobei die Bolzen durch die Spannschraube verbunden sind. Soweit die Spannbacken nur radial von den Enden des Schellenbandes abstehen, halten sie keinen hohen Spannkräften stand, ohne sich zu verbiegen. Soweit es sich um Schellen mit Bolzen handelt, sind sie für viele Anwendungsfälle zu aufwendig. Darüber hinaus sind die Bolzen durch Schlaufen hindurchgeführt, die am Schellenband angeschweißt sind, was einen zusätzlichen Aufwand bedeutet und hohe Sorgfalt beim Schweißen erfordert.

Der Erfindung liegt die Aufgabe zugrunde, eine Spannschelle der eingangs genannten Art anzugeben, bei der eine höhere Spannkraft zulässig ist und die dennoch mit weniger Einzelteilen auskommt.

Erfindungsgemäß ist diese Aufgabe dadurch gelöst, daß das Schellenband einen sich in Umfangsrichtung erstreckenden Schlitz aufweist, der an seinen Enden jeweils von einer aus dem Schellenband herausgedrückten, jeweils eine der Spannbacken bildenden, bandförmigen, etwa umgekehrt U-förmigen Schlaufe überbrückt ist.

Bei dieser Spannschelle greifen die Spannkräfte quer zur Breite des bandförmigen Schlaufenmaterials an. Die Spannbacken halten daher hohen Kräften stand, ohne sich zu verbiegen. Da sie aus dem Material des Schellenbandes herausgedrückt sind, entfällt eine separate Herstellung, Handhabung und Anbringung der Spannbacken. Hierbei kann in dem Schlitz des üblicherweise aus einem Rohblech ausgestanzten Schellenbandes vor der Umformung der ausgestanzten Platine zu dem fertigen Schellenband nicht nur der zur Bildung der Schlaufen an den Enden des Schlitzes liegende Steg, sondern auch das zur Bildung der Laschen erforderliche Material am Rand jedes Steges innerhalb des Schlitzes stehen bleiben, so daß weniger Abfall beim Ausstanzen des Schlitzes entsteht, d.h. ein Teil des andernfalls ausgestanzten Schlitzmaterials zur Bildung der Laschen verwendet wird. Die Lasche auf seiten des Spannschraubenkopfes verhindert dann, daß sich der Kopf beim Spannen der Schrauben in die zugehörige Schlaufe hineinzieht.

Wenn das Gewinde im durchgezogenen Rand eines Loches in der Lasche der benachbarten Schlaufe ausgebildet ist und diese Lasche an den angrenzenden Schlaufenschenkeln anliegt, kommt man auch ohne eine zusätzliche Mutter für die Spannschraube aus.

Sodann können die Laschen seitlich auf die angrenzenden Schlaufenschenkel umgebogene Lappen aufweisen. Diese Lappen verhindern zum einen eine Aufweitung der Schlaufen durch die Axialkräfte der Rohre und zum andern, daß sich die Laschen beim Spannen in die Schlaufen hineinziehen oder verdrehen.

Der Schlitz kann zwischen den Bandenden durch wenigstens eine weitere, radial nach außen aus dem Schellenband vorstehende, etwa umgekehrt U-förmige Schlaufe überbrückt sein.

An dieser weiteren Schlaufe kann ein Befestigungselement angebracht sein, um die Fluidleitung mittels der Spannschelle an einem Gebäudeteil oder dergleichen zu befestigen.

Wenn die weitere Schlaufe aus dem Schellenband herausgebogen ist, trägt sie gleichzeitig dazu bei, daß weniger Materialabfall beim Ausstanzen des Schlitzes entsteht.

Alternativ kann die mit einem Befestigungselement versehene weitere Schlaufe zwischen dem Schellenband und der Fluidleitung eingehängt und in Umfangsrichtung der Spannschelle verschiebbar sein. Die Befestigung der Fluidleitung kann dann in verschiedenen relativen Drehwinkellagen von Spannschelle und Fluidleitung erfolgen, so daß die Spannschraube stets leicht zugänglich ist.

Ferner kann die weitere Schlaufe mittels seitlich von der Schlaufe abgebogener Endabschnitte radial nach außen gedrückte Randabschnitte des Schlitzes untergreifen. Dies erleichtert das Verschieben der weiteren Schlaufe.

Zusätzlich kann an der Innenseite des Schellenbandes eine Gummimanschette angebracht sein, die eine elastische Lagerung der Fluidleitung in der Schelle und gleichzeitig eine Dämpfung der Übertragung akustischer Schwingungen von der Fluidleitung in das Gebäudeteil bewirkt, an dem die Fluidleitung befestigt ist. Außerdem kann die Gummimanschette die verschiebbare Schlaufe bis zum endgültigen Befestigen verschiebbar halten.

Eine weitere Ausgestaltung der Spannschelle kann darin bestehen, daß das Schellenband an seinen axialen Enden jeweils eine sich in Umfangsrichtung der Spannschelle erstreckende, einteilig mit dem Schellenband ausgebildete Reihe radial nach innen und schräg axial nach außen gerichteter keilförmiger Zähne für den Eingriff ins Fluidleitungsmaterial aufweist, wobei die Zähne mit einer senkrecht zur Achse der Spannschelle stehenden Ebene einen ersten Winkel, der zwischen 33° und 38° liegt, und die Zahnflanken einen zweiten Winkel einschließen. Diese Spannschelle kann zum Befestigen einer Fluidleitung an einer weiteren Fluidleitung, die an den Enden weitgehend glatt und zylindrisch und einander mit den Stirnflächen zugekehrt sind, aber auch zum Befestigen der auf diese Weise miteinander verbundenen Fluidleitungen in einem Gebäudeteil oder dergleichen verwendet werden. In dem genannten Bereich des ersten Winkels dringen die Zähne bei konstanter Spannkraft der Spannköpfe sehr tief in das Fluidleitungsmaterial ein, ohne daß die Zähne in Axialrichtung der Fluidleitungen zu ihren Enden hin verlaufende Einschnitte in das Fluidleitungsmaterial ausbilden, weil sie statt mit einer keilförmigen Schneidkante mit einer etwa dreieckförmigen Fläche in Axialrichtung zu den Fluidleitungsenden hin in das Fluidleitungsmaterial drücken. Wie sich gezeigt hat, hält die Verbindung der Fluidleitungen durch die Spannschelle, je nach Fluidleitungsdurchmesser, selbst bei sehr hartem Fluidleitungsmaterial in den genannten Winkelbereichen Drücken von bis zu 20 bar und mehr stand.

Vorzugsweise ist der erste Winkel gleich arc tan $\sqrt{0,5}$. Bei diesem Wert ist die Eindringtiefe der Zähne am größten und demzufolge auch die Belastbarkeit der Fluidleitungsverbindung.

Der zweite Winkel sollte höchstens 120° betragen und vorzugsweise zwischen 45° und 90° liegen. In diesem Winkelbereich dringen die Zähne besonders tief ins Fluidleitungsmaterial ein.

Wenn das Material des Schellenbandes härter als das der Fluidleitungen ist, vorzugsweise aus gehärtetem Stahl besteht, und demzufolge auch das Material der Zähne, neigen die Zähne auch bei Ausübung der höchsten Spannkraft der Spannköpfe weniger dazu, sich zu verbiegen, so daß der optimale erste Winkel der Zähne zuverlässiger eingehalten wird.

Hierbei können die Umfangsränder des Schellenbandes radial nach innen unter dem ersten Winkel abgebogen und mit den Zähnen versehen sein. Gegebenenfalls brauchen die Zähne nicht individuell aus der Platine des Schellenbandes abgebogen zu werden.

Sodann kann das Schellenband ein weiteres Metallband mit abgewinkelten Seitenwänden und einer zwischen den Seitenwänden angeordneten Dichtungsmanschette umgeben. Die Dichtungsmanschette sorgt für eine Abdichtung der Fuge zwischen den Stirnflächen der Fluidleitungen und wird durch das weitere Metallband daran gehindert, durch den Schlitz des Schellenbandes radial nach außen zu dringen.

Das weitere Metallband kann an seinen Enden einen Spannverschluß aufweisen, der durch den Schlitz des Schellenbandes radial nach außen ragt. Auf diese Weise kann das weitere Metallband unabhängig von dem Schellenband gespannt werden und die Dichtungsmanschette fest gegen die Fluidleitungen drükken. Es ist aber auch möglich, den Spannverschluß wegzulassen und das weitere Metallband, bei sich überlappenden Enden des Metallbandes, allein durch die auf das äußere Schellenband ausgeübte Spannkraft zu spannen.

Um zu verhindern, daß der Schlitz axial durch den auf die Fluidleitungen ausgeübten Fluiddruck auseinandergezogen wird, ist es günstig, wenn der Schlitz durch an seinen Rändern ausgebildete Laschen überbrückt ist, die sich axial überlappen und miteinander verbunden sind.

Die Erfindung und ihre Weiterbildungen werden nachstehend anhand der Zeichnung bevorzugter Ausführungsbeispiele näher beschrieben. Es zeigen.

Fig. 1      eine perspektivische Ansicht eines Ausführungsbeispiels einer erfindungsgemäßen Spannschelle, die eine Fluidleitung umgibt,

Fig. 2      eine perspektivische Darstellung eines zweiten erfindungsgemäßen Ausführungsbeispiels einer Spannschelle, die eine Fluidleitung umgibt,

Fig. 3      eine schematische Darstellung einer Seitenansicht der Spannschelle nach Fig. 2 in geringfügig abgewandelter Form,

Fig. 4      eine schematische Darstellung einer Seitenansicht einer Abwandlung der Spannschelle nach den Fig. 2 und 3,

Fig. 5      einen Teil eines Axialschnitts einer weiteren Abwandlung der Schlauchschelle nach Fig. 1,

Fig. 6      eine perspektivische Ansicht der Schlauchschelle nach Fig. 2, jedoch zusätzlich mit einer Gummimanschette versehen,

Fig. 7      eine perspektivische Darstellung einer Abwandlung der Schlauchschelle nach Fig. 1, die zum Befestigen eines Schlauches auf einem Endabschnitt eines Rohres und gleichzeitig zum Befestigen von Schlauch und Rohr an einem Geräte- oder Gebäudeteil oder dergleichen dient,

Fig. 8      eine perspektivische Darstellung einer Abwandlung der Schlauchschelle nach Fig. 1, die zum Befestigen eines Schlauches auf einem Endabschnitt eines Rohres oder dergleichen verwendet wird,

Fig. 9      eine perspektivische Ansicht einer abgewandelten erfindungsgemäßen Spannschelle, mittels der zwei Fluidleitungen in Form von Rohren stirnseitig aneinander befestigt, d.h. miteinander verbunden sind,

Fig. 10     einen Ausschnitt des Axialschnitts X-X nach Fig. 9 in vergrößertem Maßstab,

Fig. 11     einen Ausschnitt einer Seitenansicht der Spannschelle nach Fig. 9 in vergrößertem Maßstab zur Veranschaulichung der Form der an den axialen Enden jeder Hälfte des Schellenbandes der Spannschelle ausgebildeten Zahnreihen,

Fig. 12 den vergrößerten Ausschnitt B der Fig. 10,

Fig. 13 eine perspektivische Darstellung des in die Oberfläche der Fluidleitung eingreifenden Teils des Zahns nach Fig. 12 und

Fig. 14 ein Diagramm der Abhängigkeit der Eindringtiefe des Zahns nach Fig. 12 bei konstantem Volumen des durch den eingedrungenen Zahnteil verdrängten Fluidleitungsmaterials vom ersten Winkel $\alpha$.

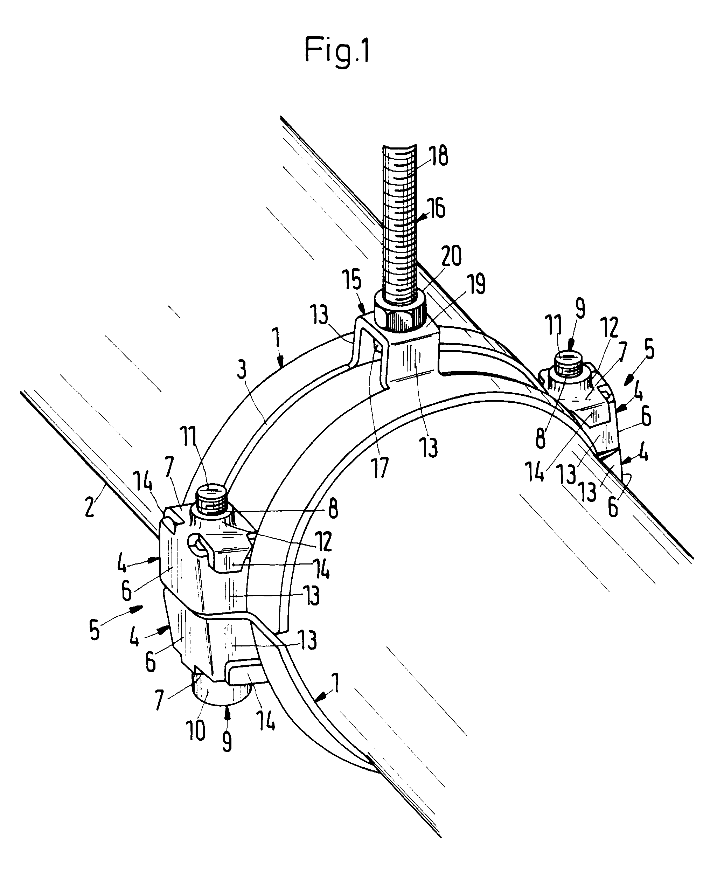

Die Spannschelle nach Fig. 1 hat zwei Schellenbänder 1, die um eine Fluidleitung 2 aus Metall oder Kunststoff zum Hindurchleiten eines Fluids, wie Wasser oder Gas, herumgelegt sind. Jedes Schellenband 1 hat einen sich in Umfangsrichtung erstreckenden Schlitz 3, der an seinen Enden jeweils von einer aus dem Schellenband 1 herausgedrückten, jeweils eine Spannbacke 4 bildenden, bandförmigen, etwa umgekehrt U-förmigen Schlaufe 4 überbrückt ist. Jeweils zwei aneinandergrenzende Schlaufen 4 bilden einen Teil eines Spannkopfes 5. Die Schlaufen 4 haben sich in Axialrichtung der Spannschelle erstreckende Joche 6. Bei jedem Spannkopf 5 sind an den einander abgekehrten Rändern der Joche 6 Laschen 7 radial nach innen abgebogen. Die Laschen 7 haben jeweils ein Loch 8, das bei jedem Spannkopf 5 von einer Spannschraube 9 durchsetzt ist. Das in Fig. 1 nicht dargestellte, auf seiten des Spannschraubenkopfes 10 in der einen Lasche 7 ausgebildete Loch dient zur Durchführung des Spannschraubenschaftes 11. Die benachbarte Lasche 7 desselben Spannkopfes 5 stützt ein Gewinde ab, das auf der Innenseite des durchgezogenen Randes 12 des Loches 8 ausgebildet ist und in das der Schaft 11 mit seinem Gewinde eingreift. Die Laschen 7 liegen an den angrenzenden Rändern der Schlaufenschenkel 13 an, so daß zum einen nicht die Laschen 7 selbst und zum andern auch nicht der Spannschraubenkopf 10 beim Spannen der Spannschraube 9 in die Schlaufen 4 des betreffenden Spannkopfes 5 hineingezogen werden bzw. wird. Ferner haben die Laschen 7 seitlich auf die angrenzenden Schlaufenschenkel 13 umgebogene Lappen 14, die ebenfalls dazu beitragen, daß beim Spannen der Spannschraube 9 weder die Laschen 7 noch der Spannschraubenkopf 10 in die betreffende Schlaufe 4 eindringen bzw. eindringt und die Schlaufen 4 sich nicht aufweiten oder verdrehen.

Der Schlitz 3 wenigstens des einen Schellenbandes 1 ist zwischen den Bandenden durch wenigstens eine weitere, radial nach außen aus dem Schellenband 1 vorstehende, etwa umgekehrt U-förmige Schlaufe 15 überbrückt, die aus dem Schellenband 1 herausgebogen ist und an der ein Befestigungselement 16 angebracht ist. Bei dem Befestigungselement 16 handelt es sich um eine Schraube mit einem Kopf 17 und einem Gewindeschaft 18, die durch ein Loch im Joch 19 der Schlaufe 15 hindurchgeführt ist, so daß ihr Kopf 17 an der radial inneren Seite des Joches 19 anliegt. Sodann ist die Schraube mittels einer Mutter 20 an der Lasche 15 gesichert. Anstelle des dargestellten Befestigungselements 16 kann aber auch ein anderes Befestigungselement an der Lasche 15 angebracht sein, z.B. ein mit einer Reihe von Löchern versehenes Band, dessen eines Ende durch die Lasche 15 hindurchgeführt und auf den mittleren Abschnitt des Bandes umgebogen und sodann mittels einer zwei miteinander fluchtende Löcher der Lasche durchsetzenden Schraube mit Mutter am mittleren Bandabschnitt befestigt wird. Das Befestigungselement 16 kann mit seinem anderen Ende an einem Gebäudeteil oder dergleichen befestigt werden, um die Fluidleitung 2 horizontal aufzuhängen oder - wenn das Rohr vertikal verlegt ist - seitlich abzustützen.

Die durch die Schlaufen 4 gebildeten Spannbacken halten aufgrund ihrer in Umfangsrichtung breiten Bandform hohen Spannkräften stand und brauchen nicht getrennt vom Schellenband 1 ausgebildet und dann mit diesem, z.B. durch Punktschweißung, verbunden zu werden. Desgleichen sind zur Abstützung der Spannschraube 9 keine separaten Teile, wie Muttern oder Unterlegscheiben, erforderlich. Zur Herstellung des Schellenbandes 1 wird zunächst eine streifen- oder bandförmige Platine aus einem Blech ausgestanzt. Gleichzeitig wird der Schlitz 3 aus dem Blech ausgestanzt, um die Schlaufen 4 zu bilden. Beim Ausstanzen des Schlitzes 3 bleibt das Material für die Laschen 7, Lappen 14 und für die weitere Schlaufe 15 stehen, d.h. es wird nicht mit ausgestanzt, so daß entsprechend weniger Materialabfall beim Ausstanzen des Schlitzes 3 anfällt. Auch die weitere Schlaufe 15 vermag hohen Kräften, wie Gewichtskräften der Fluidleitung 2, standzuhalten, da sie einstückig mit dem Schellenband 1 ausgebildet ist.

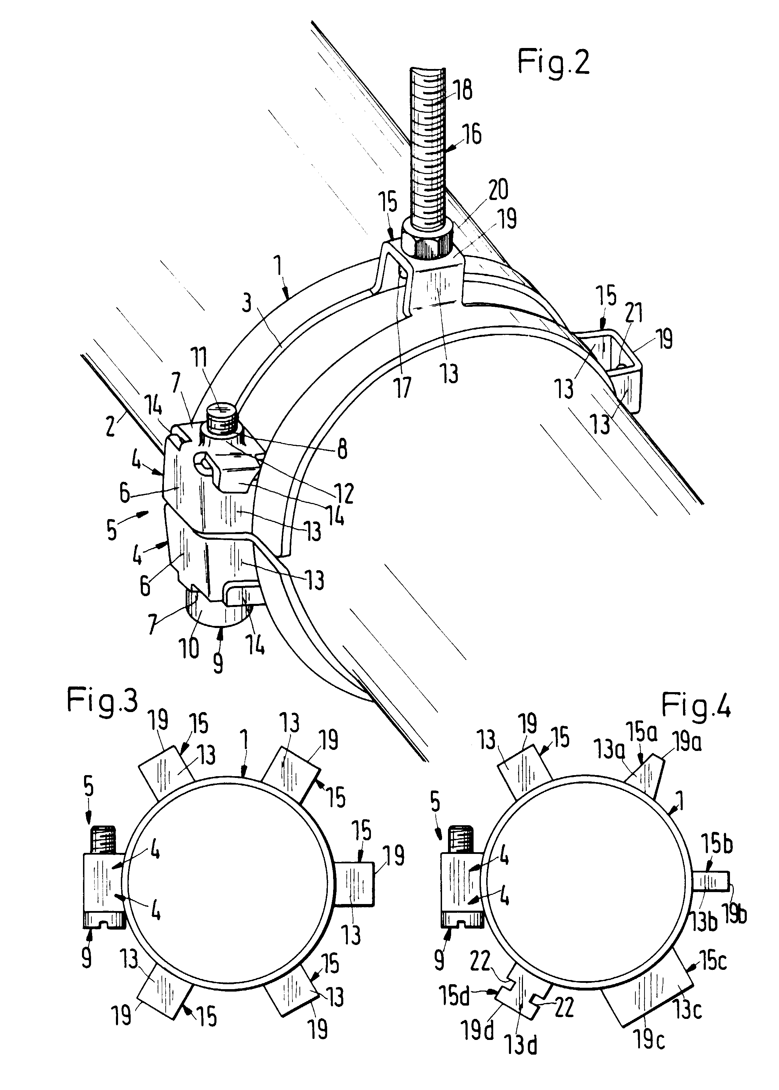

Die Spannschelle nach Fig. 2 unterscheidet sich von der nach Fig. 1 nur dadurch, daß das Schellenband 1 einteilig ausgebildet und anstelle des zweiten Spannkopfes eine weitere Schlaufe 15 zum Aufhängen und/ oder seitlichem Befestigen der Fluidleitung 2 vorgesehen ist.

Die lediglich schematisch dargestellte Spannschelle nach Fig. 3 unterscheidet sich von der nach Fig. 2 allein dadurch, daß anstelle zweier Schlaufen 15 insgesamt fünf solcher Schlaufen 15 über den Umfang des Schellenbandes 1 verteilt vorgesehen sind. Dies ermöglicht es, bei der Montage die Lage des Spannkopfes 5 je nach den Platzverhältnissen am Ort der Verlegung der Fluidleitung 2 so zu wählen, daß er, je nach Wahl der Schlaufe 15, die zur Befestigung der Fluidleitung 2 verwendet wird, am bequemsten zugänglich ist. Darüber hinaus können die in den Jochen 19 der Schlaufen 15 ausgebildeten Löcher 21 (Fig. 2) gleich sein oder von Schlaufe 15 zu Schlaufe 15 unterschiedliche Durchmesser aufweisen, um Schrauben oder andere stangenförmige Befestigungselemente 16 mit unterschiedlichen Durchmessern verwenden zu können.

Die Spannschelle nach Fig. 4 unterscheidet sich von der nach Fig. 3 lediglich dadurch, daß einige Schlaufen 15a bis 15c in den Abmessungen bzw. Formen ihrer Joche 19a bis 19c bzw. Schenkel 13a bis 13d von denen der Schlaufe 15 abweichen. Sodann kann die Schlaufe 15 in ihrem Joch 19 ein Loch 21 (siehe Fig. 2) mit einem Durchmesser von 8 mm zur Aufnahme einer Schraube 16 mit entsprechendem Durchmesser, die Schlaufe 15a ein Joch 19a ohne Loch zum Einhängen eines Lochbands oder Hakens und etwa trapezförmige Schenkel 13a, die Schlaufe 15b wiederum ein Joch 19b ohne Loch zum Einhängen eines Lochbands oder Hakens und schmalere Schenkel 13b, die Schlaufe 15c ein Joch 19c mit einem größeren Loch von beispielsweise 10 mm zur Durchführung einer Gewindespindel oder eines Stehbolzens mit entsprechendem Durchmesser und die Schlaufe 15d wiederum ein Joch 19d ohne Loch, aber mit seitlichen Aussparungen 22 in den Schenkeln 13d zum Einhängen zwischen zwei Schienen oder in einer geschlitzten Schiene aufweisen.

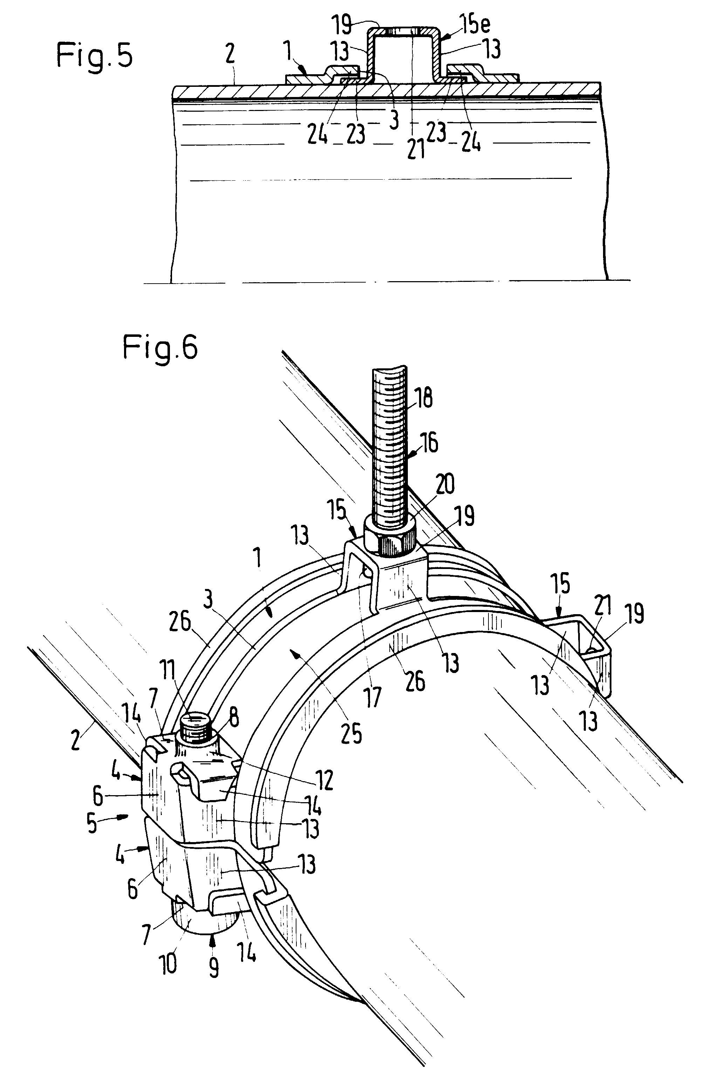

Die Spannschelle nach Fig. 5 unterscheidet sich von der nach Fig. 1 nur dadurch, daß die weitere Schlaufe 15e mittels seitlich von der Schlaufe 15e abgebogener Endabschnitte 23 radial nach außen gedrückte Randabschnitte 24 des Schlitzes 3 untergreift. Die Schlaufe 15e ist dann zwischen der Fluidleitung 2 und dem Schellenband 1 in Umfangsrichtung der Fluidleitung verschiebbar. Die Lage der weiteren Schlaufe 15e kann daher am Umfang der Fluidleitung 2, weitgehend unabhängig von der jeweiligen Drehwinkellage der Spannschelle, der jeweiligen Befestigungsstelle der Fluidleitung an der Einbaustelle besser angepaßt werden, wobei die weitere Schlaufe 15e auch so gestaltet sein kann, wie es für die Schlaufen 15a bis 15d in Fig. 4 dargestellt ist. Außerdem kann die Spannschelle an der Innenseite mit einer Gummimuffe versehen sein, zwecks Schwingungsdämpfung und gleichzeitiger Sicherung der Schlaufe 15e gegen ein Herausfallen vor der Montage der Spannschelle.

Die Spannschelle nach Fig. 6 unterscheidet sich von der nach Fig. 2 lediglich dadurch, daß an der Innenseite des Schellenbandes 1 eine Gummimanschette 25 angebracht ist, die die Umfangsrandabschnitte des Schellenbandes 1 mit Umfangsrandabschnitten 26 umgreift. Diese Gummimanschette wirkt schwingungsdämpfend und verhindert das Eindringen von "Kriechwasser" zwischen dem Schellenband 1 und der Fluidleitung 2 und somit eine Korrosion. Alternativ braucht die Gummimanschette 25 jedoch nicht die Umfangsrandabschnitte des Schellenbandes 1 mit ihren Umfangsrandabschnitten zu umgreifen, sondern es wäre auch ausreichend, wenn die Umfangsrandabschnitte der Gummimanschette 25 lediglich mit radial hochstehenden Flanschen an den Umfangsrändern des Schellenbandes 1 anliegt.

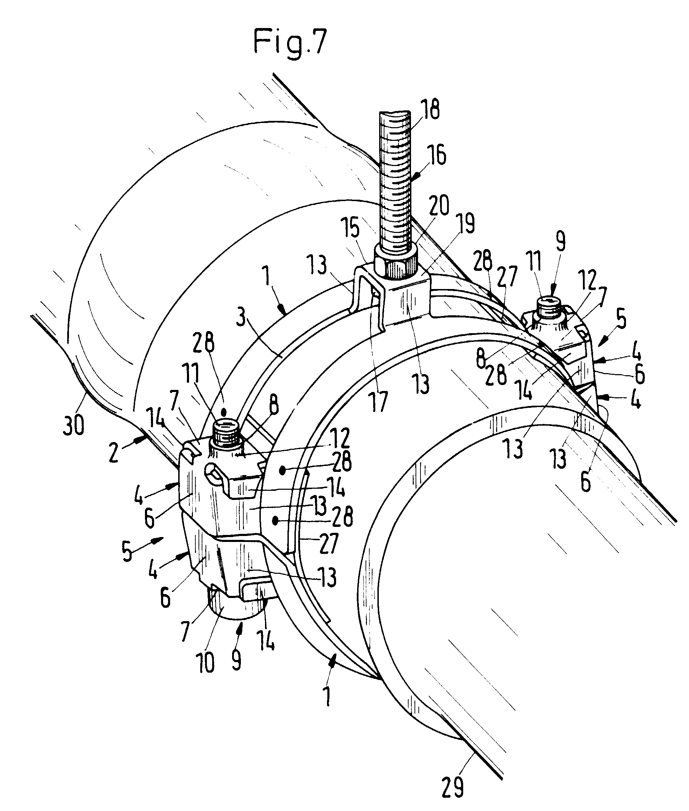

Die Spannschelle nach Fig. 7 unterscheidet sich von der nach Fig. 1 lediglich dadurch, daß der Spalt zwischen den beiden Schlaufen 4 bei jedem Spannkopf 5 jeweils durch eine entsprechend dem Krümmungsradius der Spannschelle gekrümmte Platte 27 überbrückt ist, die durch Punktschweißungen 28 jeweils mit dem einen der beiden Schellenbänder 1 verbunden ist. Anstelle der separaten Platte 27 könnten auch die seitlich von der einen Schlaufe 4 liegenden Umfangsrandabschnitte jeweils eines Schellenbandes 1 oder beider Schlaufen 4 eines Schellenbandes 1 in Umfangsrichtung verlängert sein, so daß die Verlängerungen die Spalte zwischen benachbarten Schlaufen 4 überbrücken. Diese Spannschelle kann sowohl zum Befestigen einer Fluidleitung 2 in Form eines Schlauches auf einem Rohr 29, das mit einer umlaufenden Halterippe versehen ist, durch die die Fluidleitung 2 einen radial nach außen gewölbten Wulst 30 erhält, als auch zum Befestigen der Fluidleitung 2 und damit auch des Rohres 29 mittels des Befestigungselements 16 an einem Gebäudeteil oder dergleichen verwendet werden.

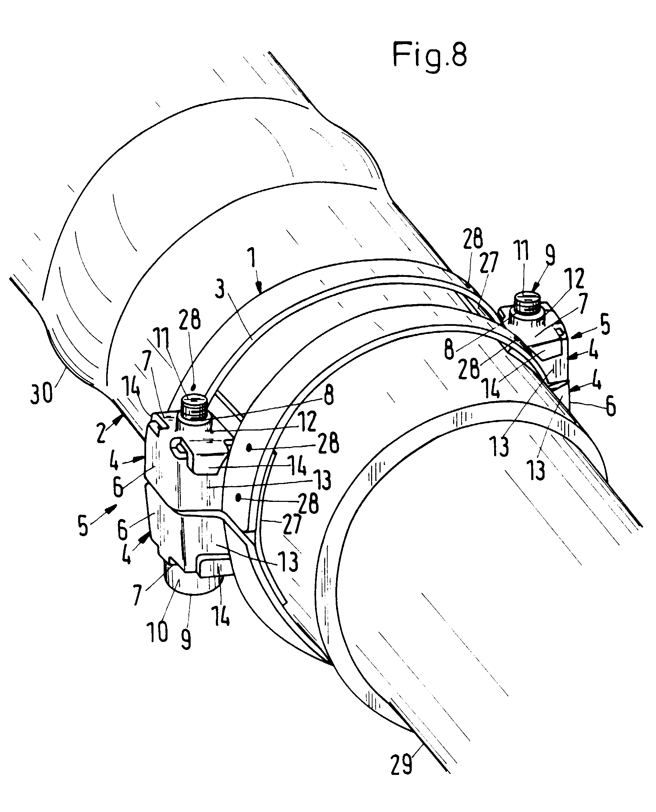

Die Spannschelle nach Fig. 8 unterscheidet sich von der nach Fig. 7 lediglich dadurch, daß die weitere Schlaufe 15 und das Befestigungselement 16 weggelassen sind, so daß diese Spannschelle nur als Schlauchschelle zum Befestigen der als Schlauch ausgebildeten Fluidleitung 2 auf dem Rohr 29 verwendet werden kann.

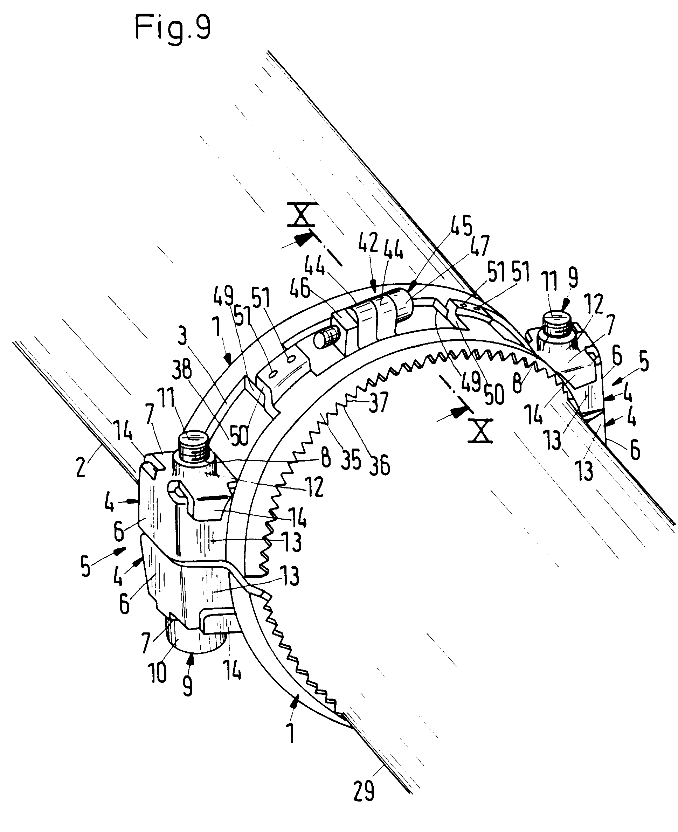

Die Spannschelle nach Fig. 9 ist im wesentlichen ebenso ausgebildet wie die Spannschelle nach Fig. 8. Sie dient ebenfalls zum Befestigen einer ersten Fluidleitung 2 in Form eines Rohres an einer zweiten Fluidleitung 29 in Form eines Rohres, und zwar so, daß die Stirnseiten beider Rohre einander zugekehrt sind. Die Fluidleitungen 2 und 29 nach Fig. 9 haben weitgehend glatte zylindrische Enden und werden durch die Spannschelle miteinander verbunden.

Abweichend von Fig. 8 hat jedes Schellenband 1 nach den Fig. 9, 10 und 12 schräg radial nach innen umgebogene Umfangsränder 35, die jeweils mit einer Reihe radial nach innen und schräg axial aus dem Schellenband 1 heraus gerichteter keilförmiger Zähne 36 mit Flanken 37 für den Eingriff ins Fluidleitungsmaterial versehen sind. Beide Schellenbänder 1 bestehen aus hartem Stahl oder gehärtetem, rostfreiem Stahl oder gehärtetem Kohlenstoffstahl oder einsatzgehärtetem Stahl, so daß sie härter als das Fluidleitungsmaterial sind.

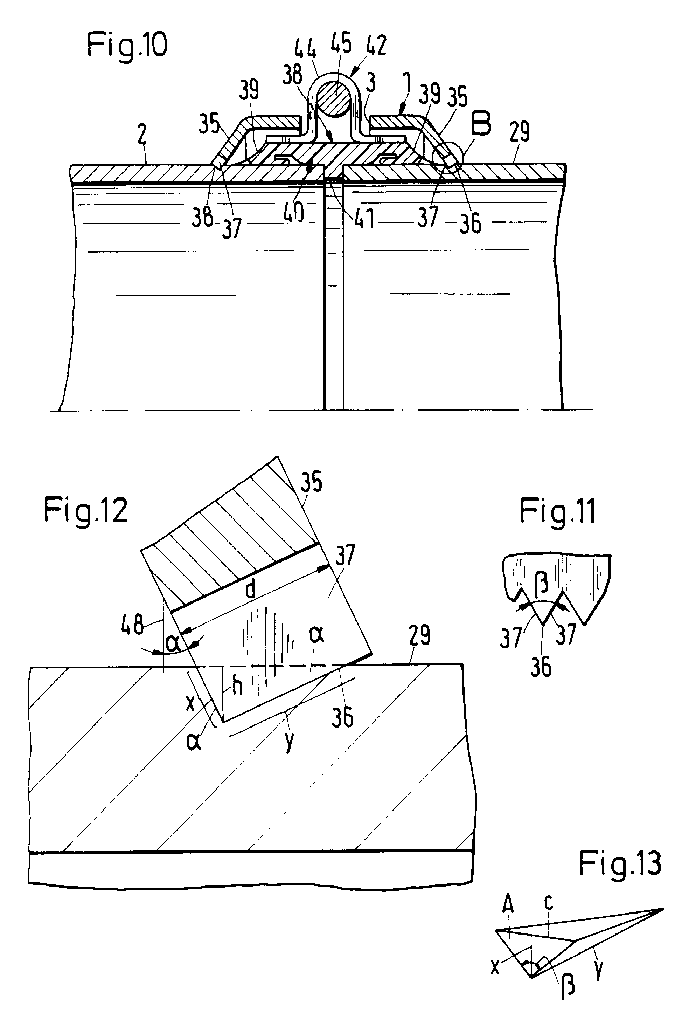

Auf der Innenseite der Schellenbänder 1 ist zwischen den beiden Umfangsrändern 35 ein spannbares Metallband 38 angeordnet. Das Metallband 38 hat an seinen axialen Enden schräg radial nach innen abgewinkelte Seitenwände 39 (Fig. 10), die sich im gespannten Zustand auf den Fluidleitungen 2, 29 abstützen und etwas nach innen durchgebogen sind. Zwischen den Seitenwänden 39 ist eine Dichtungsmanschette 40 aus elastomerem Material eingekammert. Die Dichtungsmanschette 40 hat auf ihrer Innenseite eine umlaufende Rippe 41, an der sich die Stirnseiten der Fluidleitungen 2, 29 zur Einschubbegrenzung der Fluidleitungen anlegen.

Nach Fig. 10 haben die Seitenwände 39 des Metallbandes 38 einen axialen Abstand von den benachbarten Zähnen 36.

Das Metallband 38 ist mit einem Spannverschluß 42 versehen, der durch den Schlitz 3 des einen Schellenbandes 1 radial nach außen vorsteht. Der Spannverschluß 42 ist daher zum Spannen oder Entspannen des Metallbandes 38 zugänglich. Die Schellenbänder 1 und das Metallband 38 haben gemäß Fig. 10 einen radialen Abstand voneinander.

Der Spannverschluß 42 besteht aus zwei Spannbacken 44, einer Spannschraube 45 und einer Mutter 46 in Vierkantform.

Die Spannbacken 44 bestehen jeweils aus einem Stahlband, das quer zum Metallband 38 verläuft und in der Mitte radial nach außen in Form einer Öse zur Durchführung der Spannschraube 45 gewölbt ist (Fig. 10), wobei der Kopf 47 der Spannschraube 45 (Fig. 9) an der einen Kante der einen Öse und die Mutter 46 an der einen Kante der anderen Öse anliegt. Sodann sind die Spannbacken 44 durch Punktschweißungen mit dem Metallband 38 verbunden.

Der Spannverschluß 42 kann auch weggelassen werden, wobei sich dann die Enden des Metallbandes 38 überlappen und das Metallband 38 beim Spannen der Schellenbänder 1 mitgespannt wird.

Wie Fig. 12 zeigt, schließen die Zähne 36 mit einer senkrecht zur Achse der Spannschelle stehenden Ebene 48 einen ersten spitzen Winkel $\alpha$ ein, während die Flanken 37 jedes Zahns 36 nach Fig. 11 einen zweiten spitzen Winkel $\beta$ einschließen. Beim Spannen der Spannköpfe 5 dringen die Zähne 36 daher mit ihren axial inneren Ekken normalerweise in das Fluidleitungsmaterial ein, wie es in den Fig. 10 und 12 dargestellt ist.

Gegebenenfalls kann die Verbindung der Fluidleitungen 2, 29 dann hohen Axialkräften bei hohen Drükken in den Fluidleitungen 2, 29 standhalten. Hierbei können die Innendrücke um so höher sein, je größer die Eindringtiefe der Zähne 36 ist. Insbesondere bei Fluidleitungen 2, 29 mit sehr harter Oberfläche besteht jedoch die Gefahr, das die Zähne 36 nicht hinreichend tief in das Fluidleitungsmaterial eingreifen, um das Auseinanderdrücken der Fluidleitungen 2, 29 bei sehr hohen Innendrücken zu vermeiden, da die Spannkraft, die durch die Spannköpfe 5 ausgeübt werden kann, sich nicht unbegrenzt steigern läßt. Es läßt sich jedoch anhand von Fig. 12 zeigen, daß die Eindringtiefe h der Zähne 36 bei vorgegebener Spannkraft und der angegebenen Zahnform einen maximalen Wert bei einem bestimmten Winkel $\alpha$ erreicht. Diesem überraschenden Ergebnis liegt die Erkenntnis zugrunde, daß das Volumen des Fluidleitungsmaterials, das durch den in das Material eindringenden Zahnteil verdrängt wird, bei dem vorbestimmten Winkel $\alpha$ möglichst klein sein sollte. Denn je geringer das Volumen des verdrängten Fluidleitungsmaterials ist, um so größer wird bei vorgegebener Spannkraft der Spannköpfe 5 die Eindringtiefe h sein.

Für das Volumen V des verdrängten Fluidleitungsmaterials gilt (mit hinreichend genauer Annäherung):

$$V = A\,y/3 \qquad (1)$$

wobei A die axial innere Fläche des ins Fluidleitungsmaterial eingedrungenen, in Fig. 13 perspektivisch dargestellten Zahnteils ist. Dieser Zahnteil hat mit hinreichend genauer Annäherung die Form einer dreiseitigen Pyramide mit der Grundfläche A und der Höhe y. Die Fläche A ist der Flächeninhalt des gleichschenkligen Dreiecks mit der Grundlinie c, der Höhe x und dem Winkel $\beta$ an der Spitze gegenüber der Grundlinie c. Nach Fig. 12 gilt dann für die Höhe y der Pyramide

$$y = h/\sin\alpha \qquad (2)$$

und für den Inhalt der Grundfläche

$$A = cx/2 \qquad (3)$$

Für die Höhe x der Fläche A gilt nach Fig. 12

$$x = h/\cos\alpha \qquad (4)$$

und für die Grundlinie

$$c = 2x\tan(\beta/2) \qquad (5)$$

Durch Einsetzen der Gleichungen (2) bis (5) in die Gleichung (1) erhält man dann

$$V = \frac{h^3\tan(\beta/2)}{3\sin\alpha\,\cos^2\alpha} \qquad (6)$$

Durch Umschreiben der Gleichung (6) erhält man

$$h^3 = \frac{3V}{\tan(\beta/2)}\,\sin\alpha\,\cos^2\alpha \qquad (7)$$

und durch Normierung der Gleichung (7) gemäß der folgenden Gleichung (8)

$$h^3_n = h^3\,\frac{\tan(\beta/2)}{3V} \qquad (8)$$

ergibt sich für die normierte Eindringtiefe $h_n$ bei konstantem Volumen V und konstantem Winkel $\beta$

$$h_n = \sqrt{\sin\alpha \cos^2\alpha} \qquad (9)$$

Die Abhängigkeit der normierten Eindringtiefe $h_n$ vom Winkel $\alpha$, die sich von der Eindringtiefe h nur durch den Proportionalitätsfaktor

$$k = \sqrt[3]{\frac{3V}{\tan(\beta/2)}} \qquad (10)$$

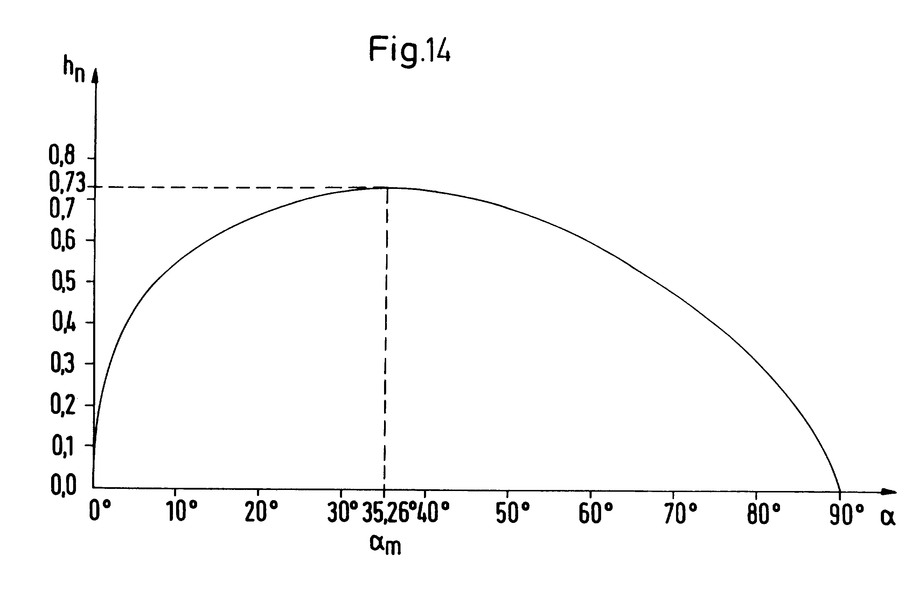

unterscheidet, ist in Fig. 14 als Kurvendiagramm dargestellt. Daraus ist ersichtlich, daß die Eindringtiefe bei dem Winkel $\alpha_m$ ein Maximum hat, und zwar unabhängig von V und $\beta$. Die Lage dieses Maximums bzw. des Winkels $\alpha_m$ ergibt sich durch Differentiation der Gleichung (9) nach $\alpha$ und Nullsetzen des Differentialquotienten zu

$$\alpha_m = \text{arc tan } \sqrt{0,5} = 35,36° \qquad (11)$$

Die optimale Eindringtiefe liegt daher bei $\alpha = \alpha_m$. Wie Fig. 14 zeigt, kann der Winkel $\alpha$ aber auch zwischen 33° und 38° liegen, ohne daß sich die Eindringtiefe wesentlich verringert. Durch Differentiation der Gleichung (6) nach $\alpha$ und Nullsetzen des Differentialquotienten läßt sich zeigen, daß bei dem gleichen Winkel von 35,26° das Volumen am kleinsten ist.

Andererseits ist die Eindringtiefe nach Gleichung (7) um so größer und das Volumen V nach Gleichung (6) um so kleiner, je kleiner der Winkel $\beta$ an der Zahnspitze zwischen den Flanken 37 jedes Zahns 36 ist, d. h. je spitzer die Zähne 6 sind. Daher sollte der Winkel $\beta$ nicht größer als 120° sein und vorzugsweise zwischen 45° und 90° liegen.

Für die Ableitung der Gleichungen (1) bis (11) gilt einschränkend, daß die Dicke d (Fig. 12) der Zähne 36 größer als y sein sollte, d.h. gemäß Gleichung (2)

$$d > h/\sin\alpha \qquad (12)$$

mit anderen Worten, daß die Zähne 36 nicht über ihre radial innere Kantenlänge hinaus ins Fluidleitungsmaterial eindringen.

Eine weitere einschränkende Voraussetzung für die Genauigkeit der Gleichungen (1) bis (10) ist, daß die Linie c in Fig. 13 als geradlinig angenommen ist, obwohl sie tatsächlich entsprechend dem Außendurchmesser der Fluidleitungen 2, 29 leicht gekrümmt ist, was bei der geringen Länge der Linie c im Verhältnis zum Umfang der Fluidleitungen 2, 29 jedoch vernachlässigbar ist.

Bei der Wahl des Winkels $\alpha_m$ hält die Fluidleitungsverbindung Fluiddrücken bis zu 20 bar und mehr stand. Bei einem Fluidleitungsdurchmesser von beispielsweise 50 bis 200 mm kann der zulässige Druck etwa 50 bis 5 bar betragen.

Der Schlitz 3 ist nach Fig. 9 ferner durch an seinen Rändern ausgebildete Laschen 49, 50 überbrückt, die sich axial überlappen und miteinander durch Punktschweißungen 51 stoffschlüssig verbunden sind. Diese Laschen 49, 50 verhindern ein axiales Aufweiten des Schlitzes 3, wenn der Fluiddruck bestrebt ist, die Fluidleitungen axial auseinanderzudrücken.

Auch die Spannschelle nach Fig. 9 kann mit einer oder mehreren weiteren Schlaufen 15, 15a bis 15d nach den Fig. 1 bis 4 versehen sein, um die Fluidleitungen 2, 29 an einem Geräte-, Gebäudeteil oder dergleichen zu befestigen.

Die Spannschelle nach Fig. 9 kann im zuvor auf seiten des Herstellers zusammengebauten, ungespannten Zustand auf den Enden zweier zu verbindender Fluidleitungen 2, 29 in der Weise montiert werden, daß zunächst die Fluidleitungen 2, 29 nacheinander mit ihren Enden bis zum Anschlag an der Rippe 41 der Dichtungsmuffe 40 eingeführt und dann die Spannköpfe 5 gespannt werden.

Weitere Abwandlungen der dargestellten Ausführungsbeispiele können beispielsweise darin bestehen, daß anstelle des einen der beiden Spannköpfe 5 nach Fig. 1 eine Gelenkverbindung zwischen den beiden Schellenbändern 1 vorgesehen wird. Alternativ können auch drei oder mehr Schellenbänder 1 vorgesehen sein, wobei dann drei oder mehr Spannköpfe 5 vorgesehen sein können. Sodann kann anstelle des in den Fig. 9 und 10 dargestellten Spannverschlusses 42 ein Spannverschluß entsprechend einem der Spannköpfe 5 vorgesehen sein.

**Patentansprüche**

1. Spannschelle zum Befestigen einer Fluidleitung (2), mit wenigstens einem Schellenband (1) aus Metall, das an jedem Ende eine radial nach außen aus dem Schellenband (1) abgebogene Spannbakke (4) aufweist, wobei die Spannbacken (4) von einer Spannschraube (9) durchsetzt sind, **dadurch gekennzeichnet**, daß das Schellenband (1) einen sich in Umfangsrichtung erstreckenden Schlitz (3) aufweist, der an seinen Enden jeweils von einer aus dem Schellenband (1) herausgedrückten, jeweils eine der Spannbacken bildenden, bandförmigen, etwa umgekehrt U-förmigen Schlaufe (4) überbrückt ist.

2. Spannschelle nach Anspruch 1, dadurch gekennzeichnet, daß die Schlaufen (4) sich in Axialrichtung der Spannschelle erstreckende Joche (6) aufweisen, an deren einander abgekehrten Rändern Laschen (7) radial nach innen abgebogen sind, von denen die auf seiten des Spannschraubenkopfes (10) liegende Lasche (7) ein Loch (8) zur Durchführung des Spannschraubenschaftes aufweist und an den angrenzenden Rändern der Schlaufenschenkel (13) anliegt und die Lasche (7) der benachbarten Schlaufe (4) ein Gewinde abstützt, in das der Spannschraubenschaft eingreift.

3. Spannschelle nach Anspruch 2, dadurch gekennzeichnet, daß das Gewinde im durchgezogenen Rand (12) eines Loches (8) in der Lasche (7) der benachbarten Schlaufe (4) ausgebildet ist und diese Lasche (7) an den angrenzenden Schlaufenschenkeln (13) anliegt.

4. Spannschelle nach Anspruch 2 oder 3, dadurch gekennzeichnet, daß die Laschen (7) seitlich auf die angrenzenden Schlaufenschenkel (13) umgebogene Lappen (14) aufweisen.

5. Spannschelle nach einem der Ansprüche 1 bis 4, dadurch gekennzeichnet, daß der Schlitz (3) zwischen den Bandenden durch wenigstens eine weitere, radial nach außen aus dem Schellenband (1) vorstehende, etwa umgekehrt U-förmige Schlaufe (15; 15a-15e) überbrückt ist.

6. Spannschelle nach Anspruch 5, dadurch gekennzeichnet, daß an der weiteren Schlaufe (15; 15a-15e) ein Befestigungselement (16) angebracht ist.

7. Spannschelle nach Anspruch 5, dadurch gekennzeichnet, daß die weitere Schlaufe (15; 15a-15e) aus dem Schellenband (1) herausgebogen ist.

8. Spannschelle nach Anspruch 6, dadurch gekennzeichnet, daß die weitere Schlaufe (15e) zwischen dem Schellenband (1) und der Fluidleitung (2) eingehängt und in Umfangsrichtung der Spannschelle verschiebbar ist.

9. Spannschelle nach Anspruch 7 oder 8, dadurch gekennzeichnet, daß die weitere Schlaufe (15e) mittels seitlich von der Schlaufe (15e) abgebogener Endabschnitte (23) radial nach außen gedrückte Randabschnitte (24) des Schlitzes (3) untergreift.

10. Spannschelle nach einem der Ansprüche 1 bis 9, dadurch gekennzeichnet, daß an der Innenseite des Schellenbandes (1) eine Gummimanschette (25) angebracht ist.

11. Spannschelle nach einem der Ansprüche 1 bis 9, dadurch gekennzeichnet, daß das Schellenband (1) an seinen axialen Enden jeweils eine sich in Umfangsrichtung der Spannschelle erstreckende, einteilig mit dem Schellenband (1) ausgebildete Reihe radial nach innen und schräg axial nach außen gerichteter keilförmiger Zähne (36) für den Eingriff ins Fluidleitungsmaterial aufweist, wobei die Zähne (36) mit einer senkrecht zur Achse der Spannschelle stehenden Ebene (48) einen ersten Winkel ($\alpha$), der zwischen 33° und 38° liegt, und die Zahnflanken (37) einen zweiten Winkel ($\beta$) einschließen.

12. Spannschelle nach Anspruch 11, dadurch gekennzeichnet, daß der erste Winkel ($\alpha$) gleich arc tan $\sqrt{0,5}$ ist.

13. Spannschelle nach Anspruch 11 oder 12, dadurch gekennzeichnet, daß der zweite Winkel ($\beta$) höchstens 120° beträgt, vorzugsweise zwischen 45° und 90° liegt.

14. Spannschelle nach einem der Ansprüche 11 bis 13, dadurch gekennzeichnet, daß das Material des Schellenbandes (1) härter als das der Fluidleitung (2; 29) ist, vorzugsweise aus gehärtetem Stahl besteht.

15. Spannschelle nach einem der Ansprüche 11 bis 14, dadurch gekennzeichnet, daß die Umfangsränder (35) des Schellenbandes (1) radial nach innen unter dem ersten Winkel ($\alpha$) abgebogen und mit den Zähnen (36) versehen sind.

16. Spannschelle nach einem der Ansprüche 11 bis 15, dadurch gekennzeichnet, daß das Schellenband (1) ein weiteres Metallband (38) mit abgewinkelten Seitenwänden (39) und einer zwischen den Seitenwänden (39) angeordneten Dichtungsmanschette (40) umgibt.

17. Spannschelle nach Anspruch 16, dadurch gekennzeichnet, daß das Metallband (38) an seinen Enden einen Spannverschluß (42) aufweist, der durch den Schlitz (3) des Schellenbandes (1) radial nach außen ragt.

18. Spannschelle nach einem der Ansprüche 11 bis 17, dadurch gekennzeichnet, daß der Schlitz (3) durch an seinen Rändern ausgebildete Laschen (49) überbrückt ist, die sich axial überlappen und miteinander verbunden sind.

**Claims**

1. A fastening clamp for fixing a fluid conduit (2), comprising at least one clamp band (1) of metal which at each end has a tightening jaw (4) which is bent over radially outwardly from the clamp band (1), wherein the tightening jaws (4) have a tightening screw (9) passing therethrough, characterised in that the clamp band (1) has a slot (3) which extends in the peripheral direction and which at each of its ends is bridged over by a respective loop (4) of band form which is of an approximately inverted U-shape and which is pressed out of the clamp band (1) and which forms a respective one of the tightening jaws.

2. A fastening clamp according to claim 1 characterised in that the loops (4) have yokes (6) which extend in the axial direction of the fastening clamp and at whose mutually remote edges plates (7) are bent over radially inwardly, of which the plate (7) which is disposed on the side of the tightening screw head (10) has a hole (8) for the tightening screw shank to pass therethrough and bears against the adjoining edges of the loop limbs (13) and the plate (7) of the adjacent loop (4) supports a screwthread into which the tightening screw shank engages.

3. A fastening clamp according to claim 2 characterised in that the screwthread is formed in the pulled-through edge (12) of a hole (8) in the plate (7) of the adjacent loop (4) and said plate (7) bears against the adjoining loop limbs (13).

4. A fastening clamp according to claim 2 or claim 3 characterised in that the plates (7) have tags (14) which are laterally bent over on to the adjoining loop limbs (13).

5. A fastening clamp according to one of claims 1 to 4 characterised in that the slot (3) between the band ends is bridged over by at least one further loop (15; 15a-15e) which is of an approximately inverted U-shape and which projects radially outwardly out of the clamp band (1).

6. A fastening clamp according to claim 5 characterised in that a fixing element (16) is disposed on the further loop (15; 15a-15e).

7. A fastening clamp according to claim 5 characterised in that the further loop (15; 15a-15e) is bent out of the clamp band (1).

8. A fastening clamp according to claim 6 characterised in that the further loop (15e) is suspended between the clamp band (1) and the fluid conduit (2) and is displaceable in the peripheral direction of the fastening clamp.

9. A fastening clamp according to claim 7 or claim 8 characterised in that the further loop (15e) engages by means of end portions (23) bent over laterally from the loop (15e) under radially outwardly pressed edge portions (24) of the slot (3).

10. A fastening clamp according to one of claims 1 to 9 characterised in that a rubber sleeve (25) is disposed at the inside of the clamp band (1).

11. A fastening clamp according to one of claims 1 to 9 characterised in that at each of its axial ends the clamp band (1) has a respective row, extending in the peripheral direction of the fastening clamp and formed integrally with the clamp band (1), of wedge-shaped teeth (36) which are directed radially inwardly and inclinedly axially outwardly for engagement into the fluid conduit material, wherein the teeth (36) include a first angle ($\alpha$) which is between 33° and 38° with a plane (48) which is perpendicular to the axis of the fastening clamp, and the tooth flanks (37) include a second angle ($\beta$).

12. A fastening clamp according to claim 11 characterised in that the first angle ($\alpha$) is equal to arc tan $\sqrt{0.5}$.

13. A fastening clamp according to claim 11 or claim 12 characterised in that the second angle ($\beta$) is at most 120° and is preferably between 45° and 90°.

14. A fastening clamp according to one of claims 11 to 13 characterised in that the material of the clamp band (1) is harder than that of the fluid conduit (2; 29) and preferably comprises hardened steel.

15. A fastening clamp according to one of claims 11 to 14 characterised in that the peripheral edges (35) of the clamp band (1) are bent over radially inwardly at the first angle ($\alpha$) and are provided with the teeth (36).

16. A fastening clamp according to one of claims 11 to 15 characterised in that the clamp band (1) embraces a further metal band (38) with angled side walls (39) and a sealing sleeve (40) which is arranged between the side walls (39).

17. A fastening clamp according to claim 16 characterised in that at its ends the metal band (38) has a tightening closure (42) which projects radially outwardly through the slot (3) in the clamp band (1).

18. A fastening clamp according to one of claims 11 to 17 characterised in that the slot (3) is bridged over by plates (49) which are provided at its edges and which axially mutually overlap and which are connected together.

**Revendications**

1. Collier de serrage pour la fixation d'un conduit (2) de circulation d'un fluide, comportant au moins un ruban de blocage (1) en métal qui présente, à chaque extrémité, une mâchoire de serrage (4) coudée radialement vers l'extérieur en dehors du ruban de blocage (1), les mâchoires de serrage (4) étant traversées par une vis de serrage (9), caractérisé par le fait que le ruban de blocage (1) est muni d'une fente (3) qui s'étend dans la direction périphérique et est respectivement coiffée, à ses extrémités, par une boucle (4) en forme de ruban, sensiblement configurée en U inversé, formant respectivement l'une des mâchoires de serrage et ménagée en saillie à partir du ruban de blocage (1).

2. Collier de serrage selon la revendication 1, caractérisé par le fait que les boucles (4) présentent des étriers (6) s'étendant dans la direction axiale du collier de serrage, sur les bords mutuellement opposés desquels sont cintrées, radialement vers l'intérieur, des attaches (7) parmi lesquelles l'attache (7), située du côté de la tête (10) de la vis de serrage, comporte un trou (8) en vue du passage de la tige de la vis de serrage, et porte contre les bords adjacents des branches (13) des boucles ; et l'attache (7) de la boucle voisine (4) offre un appui à un filetage dans lequel la tige de la vis de serrage pénètre.

3. Collier de serrage selon la revendication 2, caractérisé par le fait que le filetage est ménagé dans le bord relevé (12) d'un trou (8) pratiqué dans l'attache (7) de la boucle voisine (4), et cette attache (7) porte contre les branches adjacentes (13) des boucles.

4. Collier de serrage selon la revendication 2 ou 3, caractérisé par le fait que les attaches (7) présentent des pattes (14) cintrées latéralement vers les branches adjacentes (13) des boucles.

5. Collier de serrage selon l'une des revendications 1 à 4, caractérisé par le fait que la fente (3), pratiquée entre les extrémités du ruban, est coiffée par au moins une boucle supplémentaire (15 ; 15a-15e) sensiblement configurée en U inversé et saillant radialement, vers l'extérieur, au-delà du ruban de blocage (1).

6. Collier de serrage selon la revendication 5, caractérisé par le fait qu'un élément de fixation (16) est ménagé sur la boucle supplémentaire (15 ; 15a-15e).

7. Collier de serrage selon la revendication 5, caractérisé par le fait que la boucle supplémentaire (15 ; 15a-15e) est cintrée en dehors du ruban de blocage (1).

8. Collier de serrage selon la revendication 6, caractérisé par le fait que la boucle supplémentaire (15e) est interposée, en suspension, entre le ruban de blocage (1) et le conduit (2) de circulation du fluide, et peut coulisser dans la direction périphérique du collier de serrage.

9. Collier de serrage selon la revendication 7 ou 8, caractérisé par le fait que la boucle supplémentaire (15e) s'engage, au moyen de tronçons extrêmes (23) coudés latéralement au-delà de ladite boucle (15e), au-dessous de segments marginaux (24) de la fente (3) qui sont repoussés radialement vers l'extérieur.

10. Collier de serrage selon l'une des revendications 1 à 9, caractérisé par le fait qu'une garniture (25) en caoutchouc est placée à la face interne du ruban de blocage (1).

11. Collier de serrage selon l'une des revendications 1 à 9, caractérisé par le fait que le ruban de blocage (1) présente, à ses extrémités axiales, une rangée respective s'étendant dans la direction périphérique du collier de serrage, ménagée d'un seul tenant avec le ruban de blocage (1) et comprenant des dents cunéiformes (36) dirigées radialement vers l'intérieur et axialement à l'oblique vers l'extérieur, pour la venue en prise dans le matériau constituant le conduit de circulation du fluide, les dents (36) décrivant, avec un plan (48) perpendiculaire à l'axe du collier de serrage, un premier angle ($\alpha$) compris entre 33° et 38°, et les flancs (37) des dents décrivant un second angle ($\beta$).

12. Collier de serrage selon la revendication 11, caractérisé par le fait que le premier angle ($\alpha$) est égal à arc tan $\sqrt{0,5}$.

13. Collier de serrage selon la revendication 11 ou 12, caractérisé par le fait que le second angle ($\beta$) mesure au maximum 120° et est compris, de préférence, entre 45° et 90°.

14. Collier de serrage selon l'une des revendications 11 à 13, caractérisé par le fait que le matériau du ruban de blocage (1) est plus dur que celui du conduit (2 ; 29) de circulation du fluide et consiste, de préférence, en de l'acier trempé.

15. Collier de serrage selon l'une des revendications 11 à 14, caractérisé par le fait que les bords périphériques (35) du ruban de blocage (1) sont cintrés radialement vers l'intérieur selon le premier angle ($\alpha$), et sont pourvus des dents (36).

16. Collier de serrage selon l'une des revendications 11 à 15, caractérisé par le fait que le ruban de blocage (1) entoure un ruban métallique supplémentaire (38) comprenant des parois latérales coudées (39), et une garniture d'étanchement (40) intercalée entre les parois latérales (39).

17. Collier de serrage selon la revendication 16, caractérisé par le fait que le ruban métallique (38) présente, à ses extrémités, une fermeture (42) à genouillère qui dépasse radialement, vers l'extérieur, à travers la fente (3) du ruban de blocage (1).

18. Collier de serrage selon l'une des revendications 11 à 17, caractérisé par le fait que la fente (3) est coiffée par des mentonnets (49) ménagés sur ses bords, se chevauchant axialement et reliés les uns aux autres.

# Fig.1

Fig.2

Fig.3

Fig.4

Fig.5

Fig.6

# Fig.7

# Fig.8

# Fig.9

EP 0 769 647 B1

Fig.10

Fig.12

Fig.11

Fig.13

18

Fig.14

EP 0 769 647 B1